# EUROPEAN PATENT APPLICATION

(11) **EP 4 827 098 A1**
(43) Date of publication of application: **21.10.2026**
(21) Application number: 24902992.7
(22) Date of filing: 13.12.2024
(51) Int. Cl.: H04N 21/431

(54) **LIVE-STREAMING OBJECT PROCESSING METHOD AND APPARATUS, AND DEVICE AND STORAGE MEDIUM**

(30) Priority: 15.12.2023 CN 202311735000
(71) Applicant: Chengdu Guanghexinhao Technology Co., Ltd., Chengdu, Sichuan 610095 (CN)
(72) Inventor: WEI, Wen, Beijing 100028 (CN); HAN, Xinyi, Beijing 100028 (CN)
(74) Representative: Marks & Clerk LLP
(86) International application number: PCT/CN2024/139359
(87) International publication number: WO 2025/124577

(57) **Abstract**

The present disclosure provides a method, an apparatus, a device and a storage medium for live streaming object processing. The method includes: displaying a live streaming object set page on a live stream page, where the live streaming object set page includes a first display area and a second display area; adding the live streaming object to a candidate live streaming object set in response to a preset interactive operation for the live streaming object in the first display area, and displaying set information in the second display area; and performing, in response to a trigger operation for a first interactive control in the second display area, interaction processing corresponding to a second interactive control on the live streaming object in the candidate live streaming object set. The embodiments of the present disclosure are capable of displaying, on the live streaming object set page, the situation of the live streaming object being added to the candidate live streaming object set, and supporting triggering, on the live streaming object set page, the execution of the interaction processing corresponding to the first interactive control for the live streaming object in the candidate live streaming object set, enriching the processing method of the live streaming object, and thereby meeting the user's needs.

## Description

The present application claims priority to Chinese Patent Application No. 202311735000.1, filed on December 15, 2023, and entitled "METHOD, APPARATUS, DEVICE AND STORAGE MEDIUM FOR LIVE STREAMING OBJECT PROCESSING", which is incorporated herein by reference in its entirety.

### TECHNICAL FIELD

The present disclosure relates to the field of data processing and, in particular, to a method, an apparatus, a device and a storage medium for live streaming object processing.

### BACKGROUND

With the rapid development of the Internet, live streaming is becoming more and more common in people's lives, and more and more people are starting to buy products through live streaming. However, the current way of buying products in a live stream can no longer meet the needs of users.

In order to meet the increasing diverse needs of users, how to further enrich the processing method of live streaming object is an urgent technical issue that needs to be solved.

### SUMMARY

In order to solve the above technical problem, embodiments of the present disclosure provide a method, an apparatus, a device and a storage medium for live streaming object processing.

In a first aspect, the present disclosure provides a method for live streaming object processing. The method includes:
displaying a live streaming object set page on a live stream page, where the live streaming object set page includes a first display area and a second display area, a plurality of live streaming objects is presented in the first display area, and a first interactive control is presented in the second display area;
adding, in response to a preset interactive operation for the live streaming object in the first display area, the live streaming object to a candidate live streaming object set, and displaying set information corresponding to the candidate live streaming object set in the second display area, where the set information is determined based on live streaming objects in the candidate live streaming object set;
performing, in response to a trigger operation for a first interactive control in the second display area, interaction processing corresponding to the first interactive control on the live streaming objects in the candidate live streaming object set.

In an optional implementation, a second interactive control is further presented in the second display area, and the method further includes:
displaying, in response to a trigger operation for the second interactive control, a candidate set page on the live streaming object set page, where the live streaming objects in the candidate live streaming object set are presented on the candidate set page.

In an optional implementation, the set information includes a number identification, and the number identification represents a number of the live streaming objects in the candidate live streaming object set.

In an optional implementation, the set information includes a total resource value, and the total resource value is determined based on respective resource values corresponding to the live streaming objects in the candidate live streaming object set.

In an optional implementation, after displaying the live streaming object set page on the live stream page, the method further includes:
hiding, in response to a preset sliding operation for the first display area, the display of the second display area.

In an optional implementation, the candidate live streaming object set includes a plurality of live streaming objects, and performing, in response to the trigger operation for the first interactive control in the second display area, the interaction processing corresponding to the first interactive control on the live streaming objects in the candidate live streaming object set includes:
performing, in response to the trigger operation for the first interactive control in the second display area, a live streaming object obtaining processing corresponding to the first interactive control on the plurality of live streaming objects in the candidate live streaming object set.

In an optional implementation, the first display area includes a plurality of sub-display areas, the sub-display areas have a correspondence relationship with resource objects, a live streaming object bound to a corresponding resource object is presented in the sub-display area, and the plurality of live streaming objects in the candidate live streaming object set corresponds to at least two resource objects.

In an optional implementation, the resource objects include point of interest, POI, objects, and geographical location information of a corresponding POI object is further presented in the sub-display area.

In a second aspect, the present disclosure further provides an apparatus for live streaming object processing. The apparatus includes:
a first display module configured to display a live streaming object set page on a live stream page, where the live streaming object set page includes a first display area and a second display area, a plurality of live streaming objects is presented in the first display area, and a second interactive control is presented in the second display area;
an adding module configured to add, in response to a preset interactive operation for the live streaming object in the first display area, the live streaming object to a candidate live streaming object set, and display set information corresponding to the candidate live streaming object set in the second display area, where the set information is determined based on live streaming objects in the candidate live streaming object set; and
a performing module configured to perform, in response to a trigger operation for a first interactive control in the second display area, interaction processing corresponding to the first interactive control on the live streaming objects in the candidate live streaming object set.

In a third aspect, the present disclosure provides a computer-readable storage medium, where instructions are stored in the computer-readable storage medium, and the instructions, when executed by a terminal device, cause the terminal device to implement the above method.

In a fourth aspect, the present disclosure provides a device for live streaming object processing, including: a memory, a processor, and a computer program stored on the memory and executable on the processor, where the processor, when executing the computer program, implements the above method.

In a fifth aspect, the present disclosure provides a computer program product, including a computer program/instruction, where the computer program/instruction, when executed by a processor, implements the above method.

### BRIEF DESCRIPTION OF THE DRAWINGS

The drawings herein, which are incorporated in and constitute a part of this specification, illustrate embodiments consistent with the present disclosure and, together with the description, serve to explain the principles of the present disclosure.

In order to more clearly explain the technical solutions in the embodiments of the present disclosure or in the prior art, the drawings that need to be used in the description of the embodiments or the prior art will be briefly introduced below. Obviously, for those of ordinary skill in the art, they may also obtain other drawings according to these drawings without paying any creative effort.
FIG. 1 is a flowchart of a method of live streaming object processing provided by an embodiment of the present disclosure;
FIG. 2 is a schematic diagram of a live stream page provided by an embodiment of the present disclosure;
FIG. 3 is a schematic diagram of a live streaming object acquisition page provided by an embodiment of the present disclosure;
FIG. 4 is a schematic diagram of another live stream page provided by an embodiment of the present disclosure;
FIG. 5 is a schematic diagram of a candidate set page provided by an embodiment of the present disclosure;
FIG. 6 is a schematic diagram of another live stream page provided by an embodiment of the present disclosure;
FIG. 7 is a schematic structure diagram of an apparatus for live streaming object processing provided by an embodiment of the present disclosure; and
FIG. 8 is a schematic structure diagram of a device for live streaming object processing provided by an embodiment of the present disclosure.

### DETAILED DESCRIPTION OF EMBODIMENTS

In order to understand the above objects, features and advantages of the present disclosure more clearly, the solutions of the present disclosure will be further described below. It should be noted that the embodiments of the present disclosure and the features in the embodiments may be combined with each other without conflict.

Many specific details are set forth in the following description to facilitate a full understanding of the present disclosure, but the present disclosure may also be implemented in other ways different from those described herein. Obviously, the described embodiments are part of the embodiments of the present disclosure, but not all of the embodiments.

With the rapid development of the Internet, live streaming is becoming more and more common in people's lives, and more and more people are starting to buy products through live streaming. However, in related technologies, when a user places an order for multiple products in a live stream, the user often needs to add the multiple products to a shopping cart first, then jump from a live stream page to a shopping cart page, and merge and settle the multiple products on the shopping cart page to place an order for the products.

The above method of live streaming object processing can no longer meet the user's needs for the method of live streaming object processing, and how to further enrich the method of live streaming object processing to meet the user's needs and improve user experience has become an urgent technical issue that needs to be solved.

To this end, embodiments of the present disclosure provide a method of live streaming object processing. Specifically, a live streaming object set page is displayed on a live stream page, where the live streaming object set page includes a first display area and a second display area, a plurality of live streaming objects is presented in the first display area, and a first interactive control is presented in the second display area. The live streaming object is added to a candidate live streaming object set in response to a preset interactive operation for the live streaming object in the first display area, and set information corresponding to the candidate live streaming object set is displayed in the second display area. The set information is determined based on live streaming objects in the candidate live streaming object set. In response to a trigger operation for a first interactive control in the second display area, interaction processing corresponding to a second interactive control is performed on the live streaming objects in the candidate live streaming object set.

It may be seen that the embodiments of the present disclosure are capable of displaying, on the live streaming object set page, the situation of the live streaming object being added to the candidate live streaming object set, and supporting triggering, on the live streaming object set page, the execution of the interaction processing corresponding to the first interactive control for the live streaming objects in the candidate live streaming object set, which enriches the processing method of the live streaming object, thereby meeting the increasing diverse needs of users.

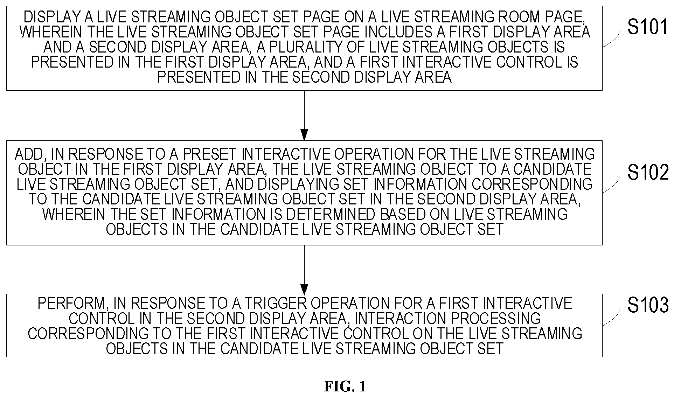

Specifically, an embodiment of the present disclosure provides a method of live streaming object processing. Referring to FIG. 1, FIG. 1 is a flowchart of a method of live streaming object processing provided by an embodiment of the present disclosure, which specifically includes the following steps.

At S101, a live streaming object set page is displayed on a live stream page.

The live streaming object set page includes a first display area and a second display area, a plurality of live streaming objects is presented in the first display area, and a first interactive control is presented in the second display area.

The method of live streaming object processing provided by the embodiments of the present disclosure is applied to a client, where the client may include a client deployed on a smartphone, a client deployed on a tablet computer, etc.

In the embodiments of the present disclosure, the live stream page is configured to implement a live streaming function for a live streaming object, where the live streaming object set page is displayed on the live stream page, and the live streaming object set page includes two display areas, i.e., the first display area and the second display area.

One or more live streaming objects are presented in the first display area, and the live streaming object may be a display object for this live streaming in the live stream, for example, including a product object and a local life service object, such as takeout.

In order to reduce the influence of the live streaming object set page on shielding the live stream page, in the embodiments of the present disclosure, a display area of the live streaming object set page may be set to be smaller than a display area of the live stream page, so as to realize presentation of the live streaming object set page to the user without affecting the function for the user to view live streaming content.

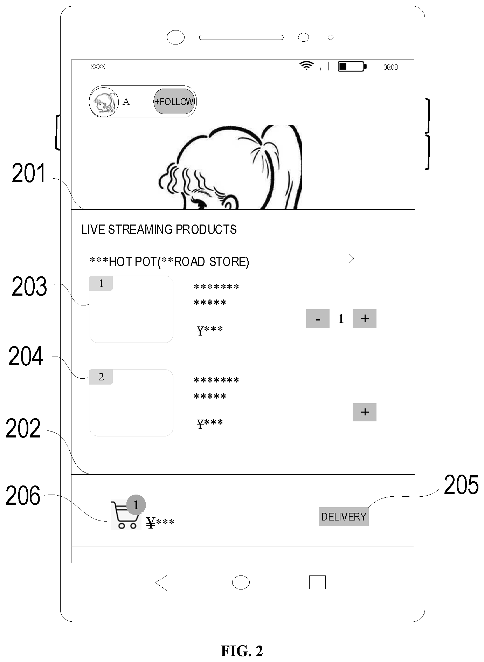

As shown in FIG. 2, FIG. 2 is a schematic diagram of a live stream page provided by an embodiment of the present disclosure. The live streaming object set page on the live stream page includes a first display area 201 and a second display area 202, where a live streaming object 203 and a live streaming object 204 are presented in the first display area, and a first interactive control 205 is presented in the second display area.

At S102, a live streaming object is added into a candidate live streaming object set in response to a preset interactive operation for the live streaming object in the first display area, and set information corresponding to the candidate live streaming object set is displayed in the second display area.

The set information is determined based on live streaming objects in the candidate live streaming object set.

In the embodiments of the present disclosure, the preset interactive operation for the live streaming object in the first display area is configured to trigger addition of the live streaming object into the candidate live streaming object set, that is, by triggering the preset interactive operation for one or more live streaming objects, implementing addition of the one or more live streaming objects into the candidate live streaming object set.

The preset interactive operation for the live streaming object in the first display area may include a selection operation for the live streaming object in the first display area, for example, the live streaming objects in the first display area are respectively provided with corresponding selection controls, and by triggering the selection control(s) corresponding to one or more live streaming objects, the one or more live streaming objects may be added into the candidate live streaming object set.

After the live streaming object is added into the candidate live streaming object set in response to the preset interactive operation for the live streaming object in the first display area, the set information corresponding to the candidate live streaming object set is displayed in the second display area, where the set information is determined by the live streaming objects in the candidate live streaming object set. With the change of the live streaming objects in the candidate live streaming object set, the set information corresponding to the candidate live streaming object set is updated and displayed.

On the basis of the above embodiments, the live streaming object may also be removed from the candidate live streaming object set, and the specific removal operation is not shown in the embodiments of the present disclosure. At this time, the set information corresponding to the candidate live streaming object set in the second display area may be updated and displayed, so as to display the real-time situation of the subsequent live streaming object set.

In practical applications, the set information displayed in the second display area may be configured to prompt the user of the situation of the live streaming objects in the candidate live streaming object set, and may specifically include the number of the live streaming objects in the candidate live streaming object set, the total resource value of the live streaming objects in the candidate live streaming object set, the condition information required for the live streaming objects in the current candidate live streaming object set to execute the above interaction processing, etc., such as how much is still short of the minimum order amount, full reduction amount, etc.

In an optional implementation, the set information includes a number identification, which is configured to represent the current number of the live streaming objects in the candidate live streaming object set, so as to prompt the user of the number of the live streaming objects in the current candidate live streaming object set.

In another optional implementation, the set information includes a total resource value, the total resource value is determined based on resource values respectively corresponding to the live streaming objects in the candidate live streaming object set, and the total resource value is configured to represent the sum of the resource values of the live streaming objects currently included in the candidate live streaming object set.

As shown in the first display area on the live stream page in FIG. 2, the set information of the candidate live streaming object set is displayed, and the set information includes a number identification and a total resource value.

At S103, in response to a trigger operation for the first interactive control in the second display area, interaction processing corresponding to the first interactive control is performed on the live streaming objects in the candidate live streaming object set.

The interaction processing corresponding to the first interactive control may be performing live streaming object acquisition processing on the live streaming objects in the candidate live streaming object set, for example, settlement processing for the live streaming objects. In an optional implementation, when the trigger operation for the first interactive control is received, a live streaming object acquisition page is displayed on the live stream page, the live streaming objects in the candidate live streaming object set are presented on the live streaming object acquisition page, and if a settlement operation of the live streaming objects is triggered, the acquisition operation for the live streaming objects in the candidate live streaming object set is performed.

In addition, in order to reduce the influence on the user's viewing of the live streaming content, in the implementation of the present disclosure, a display area of the live streaming object acquisition page is smaller than a display area of the live stream page, so as to reduce the influence of the live streaming object acquisition page on shielding the live stream page, and realize the function that the user may watch the live streaming content while acquiring the live streaming object.

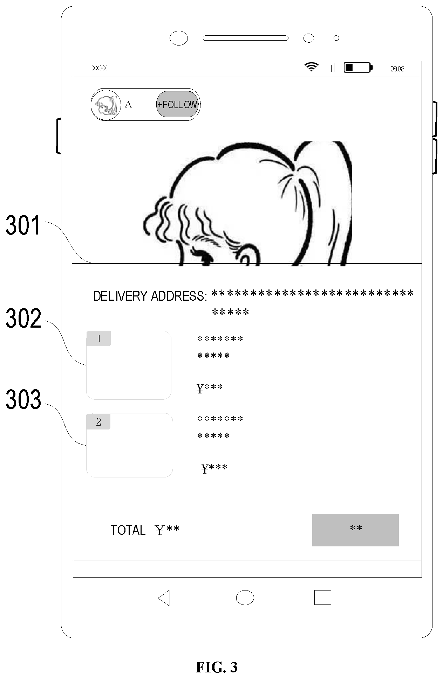

As shown in FIG. 3, FIG. 3 is a schematic diagram of a live streaming object acquisition page provided by an embodiment of the present disclosure. The live streaming object acquisition page 301, a live streaming object 302 and a live streaming object 303 are displayed on the live stream page, where the display area of the live streaming object acquisition page is smaller than the display area of the live stream page. At this time, the live streaming content is presented on the live stream page in real time.

In an application scenario, the candidate live streaming object set includes only one live streaming object. Specifically, the live streaming object set page is displayed on the live stream page, and when a trigger operation for the first interactive control in the second display area is received, the interaction processing corresponding to the first interactive control is performed on the live streaming object in the candidate live streaming object set. For the specific interaction processing process, reference may be made to the description of the above embodiments.

In practical applications, the candidate live streaming object set may also include a plurality of live streaming objects, that is, when the live streaming object set page is displayed on the live stream page, preset interactive operations are triggered sequentially or simultaneously for the plurality of live streaming objects in the first display area, so as to realize addition of the plurality of live streaming objects into the candidate live streaming object set.

When the candidate live streaming object set includes a plurality of live streaming objects, in order to support that the plurality of live streaming objects may be acquired at the same time, in the embodiments of the present disclosure, the interaction processing corresponding to the first interactive control may also be performed on the plurality of live streaming objects in the candidate live streaming object set by triggering the first interactive control. That is, the above interaction processing is performed on the plurality of live streaming objects in combination, specifically, for example, interaction processing such as placing orders for a plurality of live streaming products at the same time.

In an application scenario, the candidate live streaming object set includes a plurality of live streaming objects. Specifically, in the process of displaying the live streaming object set page on the live stream page, when the trigger operation for the first interactive control in the second display area is received, the live streaming object acquisition operation corresponding to the first interactive control may be performed on the plurality of live streaming objects in the candidate live streaming object set.

In practical applications, the live streaming objects in the first display area on the live streaming object set page may belong to the same resource object or different resource objects, where the resource object may specifically include a product brand, a store, a shop, etc., for example, the plurality of live streaming objects in the candidate live streaming object set may be products under the same brand or products under different brands, and may be products in the same store or products in different stores.

It may be understood that the live streaming objects in the first display area on the live streaming object set page may belong to the same resource object or different resource objects, and similarly, the plurality of live streaming objects in the candidate live streaming object set may belong to the same resource object or different resource objects.

In order to display the live streaming objects bound to respective resource objects on the live streaming object set page, in the embodiments of the present disclosure, the first display area on the live streaming object set page is divided into a plurality of sub-display areas, which are respectively used for displaying the live streaming objects bound to different resource objects.

Specifically, the first display area on the live streaming object set page includes a plurality of sub-display areas, and there is a correspondence between the sub-display areas and the resource objects. Optionally, the sub-display areas have a one-to-one correspondence with the resource objects, i.e., one sub-display area corresponds to one resource object. The live streaming object bound to a corresponding resource object is presented in a sub-display area, that is, the live streaming objects respectively corresponding to different resource objects may be simultaneously presented on the live streaming object set page. In addition, the sub-display area may further display relevant information of the corresponding resource object, and the relevant information of the resource object may include a resource object name, a resource object icon, resource object location information, etc.

On the basis of the above content, the plurality of live streaming objects in the candidate live streaming object set may also correspond to at least two resource objects, that is, the plurality of live streaming objects in the candidate live streaming object set belongs to at least two different resource objects.

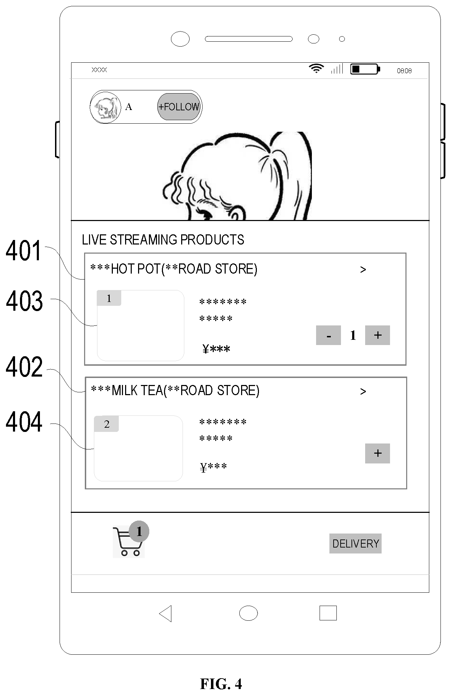

As shown in FIG. 4, FIG. 4 is a schematic diagram of another live stream page provided by an embodiment of the present disclosure. The live streaming object set page is displayed on the live stream page, and the first display area on the live streaming object set page includes a sub-display area 401 and a sub-display area 402, where a live streaming object 403 bound to a corresponding resource object and a name of the corresponding resource object are presented in the sub-display area 401, and a live streaming object 404 bound to a corresponding resource object and a name of the corresponding resource object, etc. are presented in the sub-display area 402.

In an optional implementation, the resource object may be specifically a point of interest, POI, object, and accordingly, geographical location information of a corresponding POI object may be presented in a sub-display area in the first display area, and the POI object may include a resource object such as a store.

In the first display area in the live stream page shown in FIG. 4, address location information of a corresponding POI object is presented in the sub-display area 401.

In an application scenario, the first display area on the live streaming object set page includes a plurality of sub-display areas, and each sub-display area presents one or more live streaming objects bound to a corresponding POI object, that is, a plurality of live streaming objects respectively bound to the plurality of POI objects are presented in the first display area on the live streaming object set page, that is, the live streaming objects respectively corresponding to different stores may be simultaneously displayed on the same live stream page.

The address location information of each POI object may specifically include store address information, shop name information, product delivery time, etc.

The embodiments of the present disclosure support, by triggering the first interactive control presented in the first display area, performing, on the live stream page, the interaction processing corresponding to the first interactive control for the live streaming object in the candidate live streaming object set, where the live streaming object may be one or more, and may belong to the same resource object or different resource objects. Specifically, the embodiments of the present disclosure, by triggering the first interactive control presented in the first display area, may support performing the interaction processing corresponding to the first interactive control on one or more live streaming objects corresponding to the same POI object, and may also support performing the interaction processing corresponding to the first interactive control on one or more live streaming objects respectively corresponding to different POI objects, that is, specifically, may place a combined order for live streaming products in a plurality of stores.

In the method of live streaming object processing provided by the embodiments of the present disclosure, specifically, a live streaming object set page is displayed on a live stream page, where the live streaming object set page includes a first display area and a second display area, a plurality of live streaming objects is presented in the first display area, and a first interactive control is presented in the second display area; a live streaming object is added to a candidate live streaming object set in response to a preset interactive operation for the live streaming object in the first display area, and set information corresponding to the candidate live streaming object set is displayed in the second display area, where the set information is determined based on live streaming objects in the candidate live streaming object set; and in response to a trigger operation for a first interactive control in the second display area, interaction processing corresponding to a second interactive control is performed on the live streaming objects in the candidate live streaming object set.

It may be seen that the embodiments of the present disclosure are capable of displaying, on the live streaming object set page, the situation of the live streaming object being added to the candidate live streaming object set, and supporting triggering, on the live streaming object set page, the execution of the interaction processing corresponding to the first interactive control for the live streaming objects in the candidate live streaming object set, thereby enriching the processing method of the live streaming object, and meeting the increasing diverse needs of users.

In order to support the user to view the live streaming objects in the candidate live streaming object set, in the embodiments of the present disclosure, a second interactive control is presented on the live streaming object set page displayed on the live stream page, where the second interactive control is also in the second display area, and by triggering the second interactive control, the user is supported to view the live streaming objects in the candidate live streaming object set at any time.

Specifically, when a trigger operation for the second interactive control is received, a candidate set page is displayed on the live streaming object set page. The live streaming objects in the candidate live streaming object set are presented on the candidate set page.

As shown in the live stream page in FIG. 2, the live streaming object set page is displayed on the live stream page, and a first interactive control 205 and a second interactive control 206 are presented in the second display area on the live streaming object set page. When a trigger operation for the second interactive control is received, the candidate set page is displayed in the first display area on the live streaming object set page, and the live streaming objects in the candidate live streaming object set are displayed on the candidate set page.

In practical applications, in the process of displaying the candidate set page, in order to reduce the influence of the candidate set page on shielding the live stream page, so as to ensure that the user watches the live streaming content, in the embodiments of the present disclosure, the display area of the candidate set page is smaller than the display area of the live stream page.

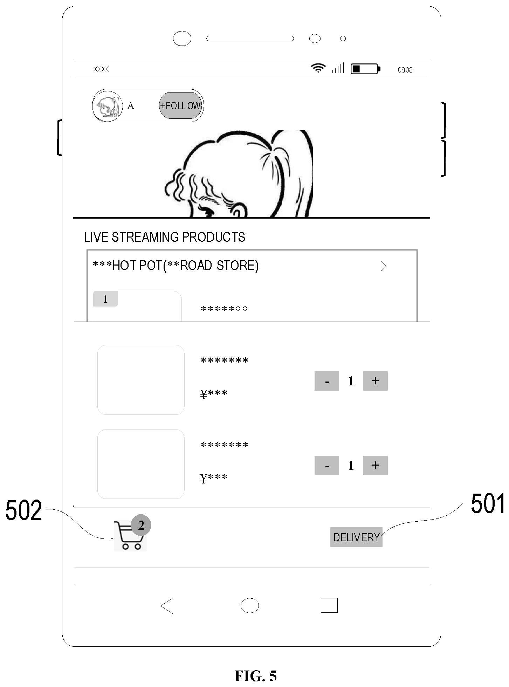

As shown in FIG. 5, FIG. 5 is a schematic diagram of a candidate set page provided by an embodiment of the present disclosure. The candidate set page is displayed on the first display area of the live streaming object set page, and the live streaming objects in the candidate live streaming object set are displayed on the candidate set page. At this time, the second display area remains unchanged, that is, a first interactive control 501 and a second interactive control 501 are displayed in the second display area.

In the embodiments of the present disclosure, by triggering the second interactive control in the second display area, the candidate set page is displayed on the live stream page without exiting the live stream page, which not only supports the user to view the live streaming objects in the candidate live streaming object set, but also facilitates the user to watch the live streaming content.

In the process of displaying the candidate set page in the first display area on the live stream page, the first interactive control and the second interactive control are also presented in the first display area. In order to support that when the candidate set page is displayed, the interaction processing corresponding to the first interactive control may be performed on the live streaming objects on the candidate set page, that is, when the live streaming objects in the candidate live streaming object set are clearly displayed, the interaction processing corresponding to the first interactive control may also be supported to be performed on the live streaming objects.

Specifically, when the candidate set page is displayed, if the trigger operation for the first interactive control in the second display area is received, the live streaming object acquisition page is displayed on the live stream page, the live streaming objects in the candidate live streaming object set are presented on the live streaming object acquisition page, and if the settlement operation of the live streaming objects is triggered, the acquisition operation for the live streaming objects in the candidate live streaming object set is performed.

In the candidate set page shown in FIG. 5, the first interactive control 501 and the second interactive control 502 are presented in the second display area, and when the trigger operation for the first interactive control is received, the live streaming object acquisition page is displayed for performing the interaction processing corresponding to the first interactive control on the live streaming objects in the candidate live streaming object set.

In the embodiments of the present disclosure, on the basis of displaying the candidate set page, the function of acquiring the live streaming object may also be realized by triggering the first interactive control without exiting the live stream. That is to say, in the embodiments of the present disclosure, the candidate set page may be displayed by first triggering the second interactive control, and then the first interactive control is triggered to perform the interaction processing corresponding to the first interactive control on the live streaming objects in the candidate live streaming object set.

In practical applications, in order to facilitate the user to browse the live streaming objects in the first display area on the live streaming object set page, in the embodiments of the present disclosure, in the process of presenting the live streaming objects in the first display area on the live streaming object set page, a preset sliding operation of the user may be received.

Specifically, when the live streaming objects are presented in the first display area on the live streaming object set page, if the preset sliding operation for the first display area is received, the display of the second display area is hidden, that is, the second display area is not displayed on the live streaming object set page.

The preset sliding operation for the first display area may specifically include an up-sliding operation, which is used for expanding the display area of the first display area, so as to facilitate the user to browse more live streaming objects.

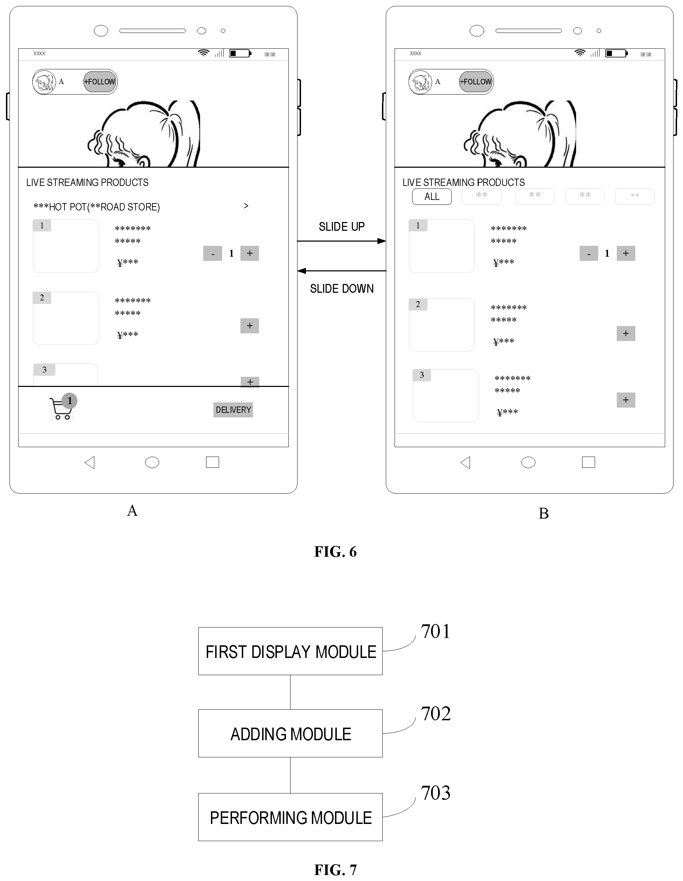

As shown in FIG. 6, FIG. 6 is a schematic diagram of another live stream page provided by an embodiment of the present disclosure. When an up-sliding operation for the first display area is received in FIG. A, the display of the second display area is hidden, and as shown in FIG. B, only the first display area is presented, which facilitates the user to browse the live streaming objects.

In addition, it may be understood that there may also be a down-sliding operation corresponding to the up-sliding operation. In the embodiments of the present disclosure, when a pull-down operation for the first display area is received, the display area of the first display area may be reduced, and when it is detected that the display area of the first display area is reduced to an initial display area, the second display area is restored and displayed, that is, the second display area is re-displayed. In the live stream page shown in FIG. 6, when the down-sliding operation for the first display area is received in FIG. B, the display area of the first display area is reduced, and when it is detected that the display area of the first display area is reduced to the initial display area, the second display area is restored and displayed, as shown in FIG. A.

On the basis of the above embodiments, when the preset sliding operation for the first display area is received, if it is detected that the first display area includes a plurality of sub-display areas, and the live streaming object bound to a corresponding resource object is presented in a sub-display area, the display of the resource object in a head sub-display area of the first display area is hidden, and the resource object may be specifically a point of interest, POI, object.

Specifically, when the up-sliding operation for the first display area is received, the display of the second display area and the point of interest, POI, object in the head sub-display area of the first display area are hidden, as shown in the process from FIG. A to FIG. B in the live stream page shown in FIG. 6.

It may also be the case that when the down-sliding operation for the first display area is received, the display area of the first display area is reduced, and when it is detected that the display area of the first display area is reduced to the initial display area, the display of the second display area is restored, and the display of the point of interest, POI, object in the head sub-display area of the first display area is restored, as shown in the process from FIG. B to FIG. A in the live stream page shown in FIG. 6.

The embodiments of the present disclosure, by triggering the preset sliding operation for the first display area, hide the display of the point of interest, POI, object in the head sub-display area of the first display area, further facilitating the user to browse the live streaming objects presented in the first display area.

Based on the above method embodiments, the present disclosure further provides an apparatus for live streaming object processing. Referring to FIG. 7, FIG. 7 is a schematic structural diagram of an apparatus for live streaming object processing provided by an embodiment of the present disclosure, and the apparatus includes:
a first display module 701 configured to display a live streaming object set page on a live stream page, where the live streaming object set page includes a first display area and a second display area, a plurality of live streaming objects is presented in the first display area, and a first interactive control is presented in the second display area;
an adding module 702 configured to add, in response to a preset interactive operation for the live streaming object in the first display area, the live streaming object to a candidate live streaming object set, and display set information corresponding to the candidate live streaming object set in the second display area, where the set information is determined based on live streaming objects in the candidate live streaming object set; and
a performing module 703 configured to perform, in response to a trigger operation for a first interactive control in the second display area, interaction processing corresponding to the first interactive control on the live streaming objects in the candidate live streaming object set.

In an optional implementation, a second interactive control is further presented in the second display area, and the apparatus further includes:
a second display module configured to display, in response to a trigger operation for the first interactive control, a candidate set page on the live streaming object set page, where the live streaming objects in the candidate live streaming object set are presented on the candidate set page.

In an optional implementation, the set information includes a number identification, and the number identification is configured to represent a number of the live streaming objects in the candidate live streaming object set.

In an optional implementation, the set information includes a total resource value, and the total resource value is determined based on respective resource values corresponding to the live streaming objects in the candidate live streaming object set.

In an optional implementation, the apparatus further includes:
a hiding module configured to hide the display of the second display area in response to a preset sliding operation for the first display area.

In an optional implementation, the candidate live streaming object set includes a plurality of live streaming objects, and the performing module is further configured to:
perform, in response to the trigger operation for the first interactive control in the second display area, live streaming object acquisition processing corresponding to the first interactive control on the plurality of live streaming objects in the candidate live streaming object set.

In an optional implementation, the first display area includes a plurality of sub-display areas, the sub-display areas have a correspondence relationship with resource objects, a live streaming object bound to a corresponding resource object is presented in the sub-display area, and the plurality of live streaming objects in the candidate live streaming object set corresponds to at least two resource objects.

In an optional implementation, the resource objects include point of interest, POI, objects, and geographical location information of a corresponding POI object is further presented in the sub-display area.

In the apparatus for live streaming object processing provided by the embodiments of the present disclosure, specifically, a live streaming object set page is displayed on a live stream page, where the live streaming object set page includes a first display area and a second display area, a plurality of live streaming objects is presented in the first display area, and a first interactive control is presented in the second display area; a live streaming object is added to a candidate live streaming object set in response to a preset interactive operation for the live streaming object in the first display area, and set information corresponding to the candidate live streaming object set is displayed in the second display area, where the set information is determined based on live streaming objects in the candidate live streaming object set; and interaction processing corresponding to a second interactive control is performed on the live streaming objects in the candidate live streaming object set in response to a trigger operation for the first interactive control in the second display area.

It may be seen that the embodiments of the present disclosure are capable of displaying, on the live streaming object set page, the situation of the live streaming object being added to the candidate live streaming object set, and supporting triggering, on the live streaming object set page, the execution of the interaction processing corresponding to the first interactive control for the live streaming objects in the candidate live streaming object set, enriching the processing method of the live streaming object, and meeting the increasing diverse needs of users.

In addition to the above methods and apparatuses, embodiments of the present disclosure further provide a computer-readable storage medium, where instructions are stored in the computer-readable storage medium, and the instructions, when executed by a terminal device, cause the terminal device to implement the method of live streaming object processing according to the embodiments of the present disclosure.

An embodiment of the present disclosure further provides a computer program product, including a computer program/instruction, where the computer program/instruction, when executed by a processor, implements the method of live streaming object processing according to the embodiments of the present disclosure.

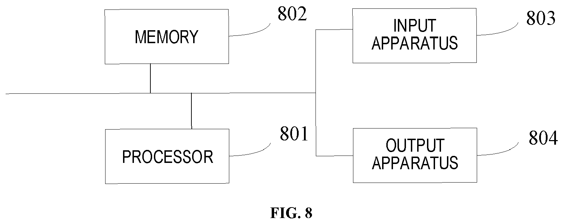

In addition, an embodiment of the present disclosure further provides a device of live streaming object processing. As shown in FIG. 8, the device may include:
a processor 801, a memory 802, an input apparatus 803, and an output apparatus 804. The number of the processors 801 in the live streaming object processing device may be one or more, and one processor is taken as an example in FIG. 8. In some embodiments of the present disclosure, the processor 801, the memory 802, the input apparatus 803, and the output apparatus 804 may be connected through a bus or in other ways, and in FIG. 8, connection through a bus is taken as an example.

The memory 802 may be used for storing software programs and modules, and the processor 801 executes various functional applications and data processing of the live streaming object processing device by running the software programs and modules stored in the memory 802. The memory 802 may mainly include a program storage area and a data storage area, where the program storage area may store an operating system, an application program required by at least one function, etc. In addition, the memory 802 may include a highspeed random access memory or a non-volatile memory, such as at least one magnetic disk storage device, a flash memory device, or other volatile solid-state storage devices. The input apparatus 803 may be used for receiving input digital or character information, and generating signal input related to user settings and function control of the live streaming object processing device.

Specifically, in this embodiment, the processor 801 will load the executable files corresponding to the processes of one or more application programs into the memory 802 according to the following instructions, and the processor 801 will run the application programs stored in the memory 802, so as to realize the various functions of the above live streaming object processing device.

It should be noted that in this paper, relational terms such as "first" and "second" are only used to distinguish one entity or operation from another entity or operation, and do not necessarily require or imply any actual relationship or order between these entities or operations. Moreover, the terms "include", "include" or any other variant thereof are intended to cover non-exclusive inclusion, so that a process, method, object or device including a series of elements includes not only those elements, but also other elements not explicitly listed or elements inherent to such process, method, object or device. Without further restrictions, the element defined by the phrase "including a" does not exclude that there are other identical elements in the process, method, object or device including the element.

The above descriptions are only specific embodiments of the present disclosure, so that those skilled in the art may understand or implement the present disclosure. Various modifications to these embodiments will be obvious to those skilled in the art, and the general principles defined herein may be implemented in other embodiments without departing from the spirit or scope of the present disclosure. Therefore, the present disclosure will not be limited to these embodiments described herein, but rather to the widest scope consistent with the principles and novel features disclosed herein.

## Claims

1. A method for live streaming object processing, wherein the method comprises:
displaying a live streaming object set page on a live stream page, wherein the live streaming object set page comprises a first display area and a second display area, a plurality of live streaming objects is presented in the first display area, and a first interactive control is presented in the second display area;
adding, in response to a preset interactive operation for the live streaming object in the first display area, the live streaming object to a candidate live streaming object set, and displaying set information corresponding to the candidate live streaming object set in the second display area, wherein the set information is determined based on live streaming objects in the candidate live streaming object set;
performing, in response to a trigger operation for a first interactive control in the second display area, interaction processing corresponding to the first interactive control on the live streaming objects in the candidate live streaming object set.

2. The method of claim 1, wherein a second interactive control is further presented in the second display area, and the method further comprises:
displaying, in response to a trigger operation for the second interactive control, a candidate set page on the live streaming object set page, wherein the live streaming objects in the candidate live streaming object set are presented on the candidate set page.

3. The method of claim 1, wherein the set information comprises a number identification, and the number identification represents a number of the live streaming objects in the candidate live streaming object set.

4. The method of claim 1, wherein the set information comprises a total resource value, and the total resource value is determined based on respective resource values corresponding to the live streaming objects in the candidate live streaming object set.

5. The method of claim 1, wherein after displaying the live streaming object set page on the live stream page, the method further comprises:
hiding, in response to a preset sliding operation for the first display area, the display of the second display area.

6. The method of claim 1, wherein the candidate live streaming object set comprises a plurality of live streaming objects, and performing, in response to the trigger operation for the first interactive control in the second display area, the interaction processing corresponding to the first interactive control on the live streaming objects in the candidate live streaming object set comprises:
performing, in response to the trigger operation for the first interactive control in the second display area, live streaming object obtaining processing corresponding to the first interactive control on the plurality of live streaming objects in the candidate live streaming object set.

7. The method of claim 6, wherein the first display area comprises a plurality of sub-display areas, the sub-display areas have a correspondence relationship with resource objects, a live streaming object bound to a corresponding resource object is presented in the sub-display area, and the plurality of live streaming objects in the candidate live streaming object set corresponds to at least two resource objects.

8. The method of claim 7, wherein the resource objects comprise point of interest, POI, objects, and geographical location information of a corresponding POI object is further presented in the sub-display area.

9. An apparatus for live streaming object processing, comprising:
a first display module configured to display a live streaming object set page on a live stream page, wherein the live streaming object set page comprises a first display area and a second display area, a plurality of live streaming objects is presented in the first display area, and a first interactive control is presented in the second display area ;
an adding module configured to add, in response to a preset interactive operation for the live streaming object in the first display area, the live streaming object to a candidate live streaming object set, and display set information corresponding to the candidate live streaming object set in the second display area, wherein the set information is determined based on live streaming objects in the candidate live streaming object set;
a performing module configured to perform, in response to a trigger operation for a first interactive control in the second display area, interaction processing corresponding to the first interactive control on the live streaming objects in the candidate live streaming object set.

10. A computer-readable storage medium having instructions stored therein, wherein the instructions, when executed by a terminal device, cause the terminal device to implement the method of any one of claims 1 to 8.

11. A device for live streaming object processing, comprising: a memory, a processor, and a computer program stored on the memory and executable on the processor, wherein the processor, when executing the computer program, implements the method of any one of claims 1 to 8.
